(19) Europäisches Patentamt / European Patent Office / Office européen des brevets

(11) **EP 2 154 013 B1**

(12) **FASCICULE DE BREVET EUROPEEN**

(45) Date de publication et mention
de la délivrance du brevet:
**02.11.2011   Bulletin 2011/44**

(51) Int Cl.:
***B60H 1/00*** *(2006.01)*

(21) Numéro de dépôt: **09166696.6**

(22) Date de dépôt: **29.07.2009**

(54) **Appareil de chauffage, ventilation et/ou climatisation à acoustique améliorée**

Heizungs-, Lüftungs- und/oder Klimaalage mit verbesserter Geräuschdämmung

Heating, ventilating and/or air conditioning device with improved sound insulation

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **13.08.2008  FR 0804580**

(43) Date de publication de la demande:
**17.02.2010   Bulletin 2010/07**

(73) Titulaire: **Valeo Systèmes Thermiques**
**78321 Le Mesnil Saint Denis Cedex (FR)**

(72) Inventeurs:
 • **Naji, Said**
   **78990, ELANCOURT (FR)**
 • **Brosseron, Laurent**
   **78180, MONTIGNY LE BRETONNEUX (FR)**
 • **Vincent, Philippe**
   **28230, EPERNON (FR)**
 • **Legot, Laurent**
   **75020, PARIS (FR)**

(74) Mandataire: **Léveillé, Christophe**
**Valeo Systemes Thermiques**
**Service Propriété Industrielle**
**Branche Thermique Habitacle**
**8, rue Louis Lormand**
**La Verrière BP 513**
**78321 Le Mesnil-Saint-Denis Cedex (FR)**

(56) Documents cités:
**DE-A1- 3 541 263     FR-A- 2 583 000**
**GB-A- 2 340 550      US-A- 4 958 504**

**Description**

La présente invention concerne les appareils de chauffage, ventilation et/ou climatisation. Plus particulièrement, elle vise l'amélioration de l'acoustique de tels appareils.

Les appareils de chauffage, ventilation et/ou climatisation comprennent, de façon générale, des entrées d'air extérieur et d'air recirculé afin de permettre l'admission d'un flux d'air mis en mouvement par un groupe moto-ventilateur. Ce flux d'air est par la suite traité thermiquement par des échangeurs de chaleur froids et chauds tels que des évaporateurs, des radiateurs et des chauffages électriques. De plus, les appareils de chauffage, ventilation et/ou climatisation disposent également de moyens de mixage de flux d'air à l'intérieur d'un boîtier pour permettre la mise en température du flux d'air à distribuer dans l'habitacle du véhicule. Ils comportent également moyens de répartition de flux d'air à l'intérieur du boîtier pour la répartition du flux d'air traité thermiquement en différentes zones de l'habitacle.

La disposition du groupe moto-ventilateur par rapport aux autres organes de l'appareil de chauffage, ventilation et/ou climatisation peut être source de nuisances sonores qui détériorent le confort intérieur. De telles nuisances sonores peuvent être entendues par l'occupant de l'habitacle du véhicule automobile et ainsi contribuer à un sentiment d'insatisfaction et d'inconfort.

En particulier, le groupe moto-ventilateur peut être agencé de telle sorte que le flux d'air généré arrive sur l'évaporateur selon une direction faisant un angle particulier avec une face amont de l'évaporateur. En particulier, le flux d'air peut s'écouler tangentiellement à la face amont de l'évaporateur. Cet écoulement tangentiel vient perturber l'écoulement principal qui est perpendiculaire à la face amont de l'évaporateur. Une telle perturbation génère au contact de l'évaporateur des nuisances sonores, notamment chargées en hautes fréquences.

Dans les appareils de chauffage, ventilation et/ou climatisation disposant d'un volume important, il est connu de disposer des aubes de taille importante dans l'espace amont de l'évaporateur pour forcer l'écoulement du flux d'air selon une direction qui soit perpendiculaire à la face amont de l'évaporateur.

La tendance actuelle est à la réduction du volume général de l'appareil de chauffage, ventilation et/ou climatisation. Ainsi, l'espace amont de l'évaporateur est réduit et ne permet pas la mise en place de telles aubes de taille importante.

De plus, la disposition du groupe moto-ventilateur par rapport aux autres organes de l'appareil de chauffage, ventilation et/ou climatisation peut être à l'origine de création de turbulences qui sont produites en sortie du groupe moto-ventilateur. Ces turbulences ont pour conséquence qu'une partie du flux d'air généré par le groupe moto-ventilateur est refoulé en amont vers les roues du groupe moto-ventilateur au lieu d'être diffusé vers l'évaporateur. Ce refoulement amont du flux d'air crée un phénomène d'instabilité du flux d'air à l'origine de nuisances sonores.

Rien n'est mis en place actuellement pour limiter ces écoulements tangentiels et/ou les refoulements amont du flux d'air et les conséquences acoustiques que ces phénomènes entraînent.

Le document DE3541263 divulgue un exemple d'appareil de chauffage, ventilation et/ou climatisation pour un habitacle de véhicule automobile, comprenant un boîtier logeant un groupe moto-ventilateur et comportant un conduit ayant une paroi canalisant un flux d'air depuis une sortie du groupe motoventilateur dans le boîtier selon une direction d'écoulement.

L'objet de la présente invention est de surmonter les inconvénients précités. A cet effet, l'invention propose un appareil de chauffage, ventilation et/ou climatisation, notamment pour un habitacle de véhicule automobile, selon les caractéristiques de la revendications 1.

Grâce à l'invention, on peut améliorer le confort acoustique de l'occupant de l'habitacle du véhicule automobile, en réduisant ou supprimant les nuisances sonores, en particulier les bruits dit "de feuilles mortes" ou de fluctuation du flux d'air.

De plus, le groupe moto-ventilateur comporte une volute évolutive muni d'un bec de volute. Ainsi, le moyen d'obstruction est disposé sur la paroi du conduit opposée au bec de volute.

Alternativement ou en complément, le moyen d'obstruction est disposé sur la paroi du conduit tangente au bec de volute.

Selon un autre mode de réalisation, l'appareil de chauffage, ventilation et/ou climatisation comporte un divergent disposé en aval du conduit. Dans cette configuration, le moyen d'obstruction est disposé sur la paroi entre le bec de volute et le divergent ou entre la projection du bec de volute sur la paroi opposée et le divergent.

De façon préférentielle, , la sortie du groupe moto-ventilateur (2) et le divergent (34) étant distants d'une longueur 'd', le moyen d'obstruction est agencé entre la sortie du groupe moto-ventilateur et une position se trouvant à la moitié d'une longueur 'd'.

Selon un autre mode de réalisation, le moyen d'obstruction s'étend sur une hauteur 'a' comprise entre 5% et 50% d'une hauteur 'H' du conduit. En complément ou en alternative, le moyen d'obstruction s'étend sur une largeur 'b' comprise entre 5% et 100% d'une largeur 'L' du conduit.

Par ailleurs, selon un autre exemple d'agencement, la paroi comporte deux moyens d'obstruction disposés respectivement selon un angle compris de 30° à 150° par rapport à la direction d'écoulement du flux d'air F et décalés d'une distance 'e' dans la direction d'écoulement du flux d'air F.

Dans une telle disposition, les deux moyens d'obstruction s'étendent sur des hauteurs identiques ou différentes et/ou sur des largeurs identiques ou différentes.

Les deux moyens d'obstruction peuvent être agencés sur la même paroi du conduit ou sur des parois différentes du conduit.

D'autres avantages et caractéristiques de l'invention apparaîtront à la lecture de la description qui suit. Cette description est purement illustrative et donnée à titre d'exemple et doit être lue en se référant aux dessins annexés sur lesquels on a représenté :

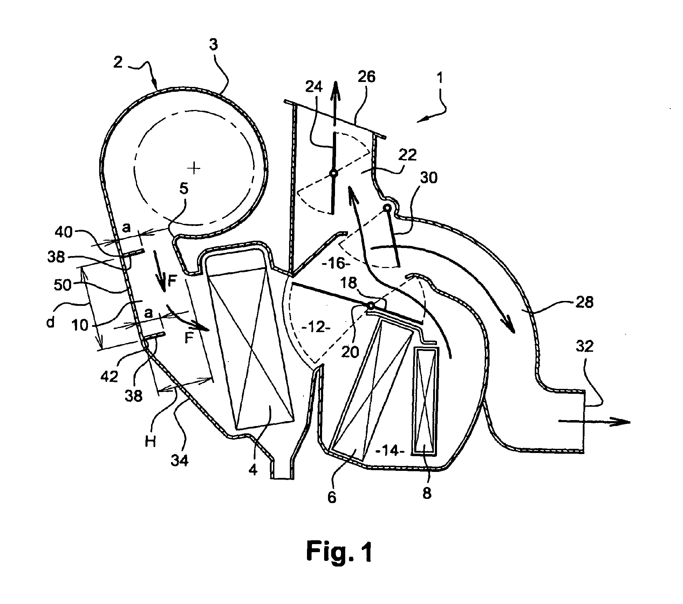

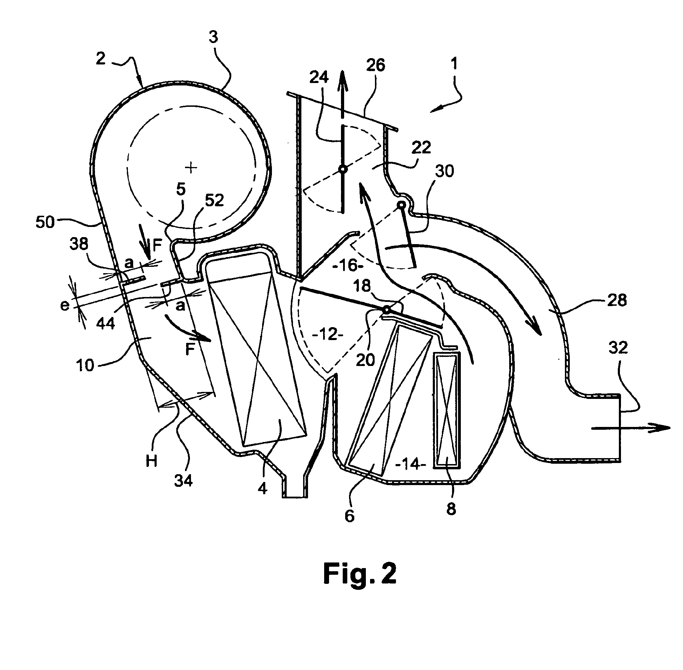

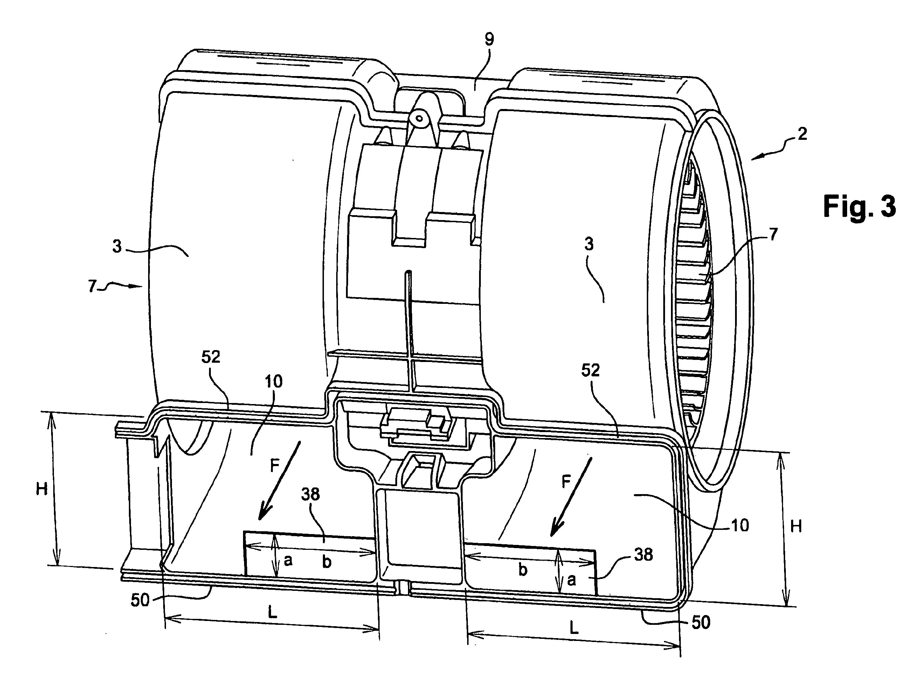

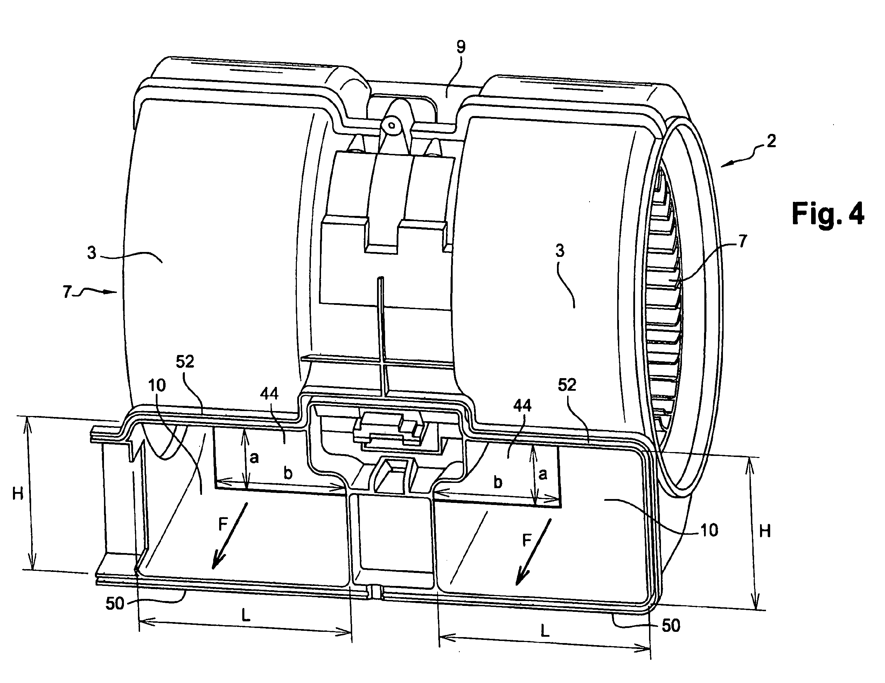

En figure 1, un appareil de chauffage, ventilation et/ou climatisation selon une première variante de réalisation de la présente invention,
En figure 2, un appareil de chauffage, ventilation et/ou climatisation selon une deuxième variante de réalisation de la présente invention,
En figure 3, un groupe moto-ventilateur d'un appareil de chauffage, ventilation et/ou climatisation selon la présente invention, et
En figure 4, un groupe moto-ventilateur d'un appareil de chauffage, ventilation et/ou climatisation selon une variante de la présente invention.

On se réfère tout d'abord à la figure 1 qui représente une vue en coupe selon un plan vertical orienté dans la direction longitudinale, c'est-à-dire une direction orientée avant-arrière d'un véhicule, d'un appareil de chauffage, ventilation et/ou climatisation selon un premier mode de réalisation de la présente invention.

L'appareil de chauffage, ventilation et/ou climatisation comporte un boîtier 1. Il comprend notamment, en tant qu'éléments principaux de traitement d'air, un groupe moto-ventilateur 2, constitué par un moteur et au moins une turbine, au moins un échangeur de chaleur, en particulier un évaporateur 4, un radiateur de chauffage 6 et une source de chaleur d'appoint 8, en particulier une résistance électrique à coefficient de température positif.

Le boîtier 1 peut également comporter des moyens de filtration du flux d'air comme un filtre à particules ou un filtre combiné. Ces éléments de filtration peuvent être disposés au niveau de l'entrée d'air (non représentée) de l'appareil en amont, selon le sens de déplacement de l'air, du groupe moto-ventilateur 2 ou entre le groupe moto-ventilateur 2 et l'évaporateur 4, en amont de ce dernier.

Selon l'exemple de réalisation de la figure 1, le groupe moto-ventilateur 2 est disposé dans la partie supérieure et en l'avant du boîtier 1 (par rapport au sens de la marche du véhicule) et produit un flux d'air F circulant dans un conduit 10 situé à l'extrémité avant du boîtier 1. Le groupe moto-ventilateur 2 comporte une volute évolutive 3 comportant un bec de volute 5. La volute évolutive 3 se termine par une sortie du groupe moto-ventilateur 2.

Le conduit 10 est raccordé à la sortie du groupe moto-ventilateur 2 et comporte une paroi interne 50 qui canalise le flux d'air F en sortie du groupe moto-ventilateur 2. En sortie du conduit 10, le flux d'air F est introduit dans un divergent 34 qui permet au flux d'air F d'être diffusé sur la totalité de la surface de l'évaporateur 4. Le flux d'air F circule ensuite sensiblement de l'avant vers l'arrière à travers l'évaporateur 4, avant de se répartir dans différents éléments de trajet.

Les éléments de trajet situés en aval de l'évaporateur 4 sont constitués par un conduit froid 12 canalisant une partie de l'air ayant traversé l'évaporateur 4 vers une zone de mixage 16. En parallèle du conduit froid 12, un conduit chaud 14 canalise une partie de l'air ayant traversé l'évaporateur 4 vers le radiateur de chauffage 6 et la source de chaleur d'appoint 8, disposés dans le conduit chaud 14.

La répartition dans le conduit froid 12 et le conduit chaud 14 est commandée par un volet 18 monté pivotant autour d'un axe transversal 20 s'étendant à travers le boîtier 1, de manière à se déplacer entre deux positions extrêmes, respectivement d'ouverture en trait plein et de fermeture en trait interrompu.

Dans la position d'ouverture, les ailes du volet 18 libèrent respectivement l'entrée et la sortie du conduit 14 pour aboutir à une zone de mixage 16 située au-dessus du volet 18. Le volet 18, s'étendant sur toute la largeur du boîtier, obture le passage direct de l'évaporateur 4 à la zone de mixage 16.

Dans la position de fermeture, les ailes du volet 18 obturent respectivement l'entrée et la sortie du conduit chaud 14. Le volet 18, s'étendant sur toute la largeur du boîtier, libère le passage direct de l'évaporateur 4 pour aboutir à une zone de mixage 16.

Dans des positions intermédiaires du volet 18, les conduits froid 12 et chaud 14 alimentent en proportion variable, la zone de mixage 16 en air froid et en air chaud permettant ainsi d'avoir un flux d'air résultant à température souhaitée.

A partir de la zone de mixage 16, des éléments de trajet 22 et 28 amènent l'air respectivement à des sorties 26 et 32 reliées respectivement à un ou plusieurs aérateurs de la zone avant de l'habitacle, notamment aux buses de dégivrage, des sorties vers la zone 'pieds' de la zone avant du véhicule ou des sorties vers la zone arrière du véhicule. Des volets pivotants 24 et 30 placés dans les éléments de trajet 22 et 28 permettent de régler les débits d'air parvenant aux sorties correspondantes.

Selon un premier exemple de réalisation de la présente invention, le conduit 10 comporte au moins un moyen d'obstruction 38 disposé perpendiculairement à une direction d'écoulement du flux d'air F.

Plus particulièrement, selon le mode de réalisation de la figure 1, le conduit 10 comprend un moyen d'obstruction 38 qui peut être disposé le long de la paroi interne 50 du conduit 10 entre une première position 40 et une deuxième position 42.

Le moyen d'obstruction 38 s'étend, de façon préférentielle, dans une direction sensiblement perpendiculaire à la paroi interne 50 du conduit 10 et est agencé perpendiculairement à la direction d'écoulement du flux d'air F. La direction d'écoulement du flux d'air F se confond, de façon générale, avec la direction d'extension du conduit 10.

Le moyen d'obstruction 38 est réalisé sous la forme d'une cloison disposée sur la paroi 50 du conduit 10 opposée au bec de volute 5. Alternativement, le moyen d'obstruction 38 est réalisé sous la forme d'une cloison disposée sur la paroi du conduit 10 tangent au bec de volute 5.

Selon la présente invention, le conduit 10 a une hauteur 'H'. Le moyen d'obstruction 38 s'étend sur une hauteur 'a'.

Selon une variante de réalisation, le moyen d'obstruction 38 peut être disposé de façon à former un angle compris entre 30° et 150° par rapport à la direction de l'écoulement F. Un tel choix permet de minimiser les créations nuisances sonores tout en respectant les performances aérauliques en terme de débit.

Selon le premier mode de réalisation de la présente invention, le moyen d'obstruction 38 est disposé sur la paroi 50 du conduit 10 en différentes positions comprise entre la première position 40 et la deuxième position 42.

La première position 40 correspond à la position du bec de volute 5 sur la paroi du conduit 10 tangente au bec de volute 5 ou à la projection du bec de volute 5 sur la paroi du conduit 10 opposée au bec de volute 5.

La deuxième position 42 correspond à la position du début du divergent 34 sur la paroi du conduit 10 opposé au bec de volute 5 ou au début divergent 34 sur la paroi du conduit 10 tangente au bec de volute 5.

La première position 40 et la deuxième position 42 du moyen d'obstruction 38 sont distantes l'une de l'autre d'une distance 'd'.

En définissant comme origine la première position 40, selon la présente invention, le moyen d'obstruction 38 est donc disposé à une position 'p' telle que

$$0 < p < d.$$

De façon préférentielle, le moyen d'obstruction 38 est plus particulièrement disposé à une position 'p' telle que:

$$0 < p < d/2.$$

La disposition du moyen d'obstruction 38 dans le conduit 10 permet d'éviter qu'une partie du flux d'air F généré par le groupe moto-ventilateur 2 ne soit refoulé en amont vers les roues du groupe moto-ventilateur 2 au lieu d'être diffusé vers l'évaporateur 4. Le moyen d'obstruction 38 a donc pour effet de réduire, voire d'annuler les turbulences crées au niveau des parois du conduit 10.

De plus, le moyen d'obstruction 38 dans le conduit 10 permettent de modifier la direction de l'écoulement du flux d'air F dans le conduit 10 afin que la direction du flux d'air soit redressée d'une direction sensiblement tangentiellement à la face amont de l'évaporateur 4 à une direction faisant un angle faible à une direction normale à la face amont de l'évaporateur 4.

De façon préférentielle, le moyen d'obstruction 38 est agencé dans le conduit 10 de telle façon que le flux d'air F arrive sur l'évaporateur 4 selon une direction normale ou sensiblement normale à la face amont de l'évaporateur 4.

Le moyen d'obstruction 38 redresse les lignes de courant du flux d'air F afin de forcer l'écoulement du flux d'air F pour éviter une arrivée tangentielle sur l'évaporateur 4.

Par ailleurs, la disposition du moyen d'obstruction 38 est telle que l'écoulement du flux d'air dans le conduit 10 se fait sans augmenter de façon préjudiciable les pertes de charges.

En effet, l'augmentation de la perte de charge dans un écoulement du flux d'air F est essentiellement due par les turbulences que crée cet écoulement. Selon la présente invention, le moyen d'obstruction 38 permet de réduire ou supprimer les turbulences. Il en résulte une réduction des pertes de charge.

On se réfère dorénavant à la figure 2 qui représente une vue en coupe selon un plan vertical orienté dans la direction longitudinale, c'est-à-dire une direction orientée avant-arrière du véhicule, d'un appareil de chauffage, ventilation et/ou climatisation selon un deuxième mode de réalisation de la présente invention.

L'appareil de chauffage, ventilation et/ou climatisation de la figure 2 reprend de nombreux éléments identiques à ceux décrits en relation avec la figure 1. En conséquence, sauf mention contraire, ces éléments seront identifiés par une référence commune et auront des caractéristiques similaires.

L'appareil de chauffage, ventilation et/ou climatisation de la figure 2 diffère de l'exemple de réalisation de la figure 1 en ce qu'il comporte deux moyens d'obstruction 38 et 44 disposés sur différentes parois dans le conduit 10.

En effet, selon deuxième mode de réalisation de la présente invention, le conduit 10 comporte au moins deux moyens d'obstruction 38 et 44 agencés perpendiculairement à la direction d'écoulement du flux d'air 10. Les moyens d'obstruction 38 et 44 sont réalisés sous la forme de cloisons disposées respectivement sur la paroi du conduit 10 opposée au bec de volute 5 et sur la paroi du conduit 10 tangente au bec de volute 5.

De façon préférentielle, les moyens d'obstruction 38 et 44 s'étendent également perpendiculairement aux parois du conduit 10 sur lesquelles ils sont disposés.

Selon une variante de réalisation, le moyen d'obstruction 40 ou 44 peut être disposé de façon à former un angle compris entre 30° et 150° par rapport à la direction de l'écoulement F. Un tel choix permet de minimiser les créations nuisances sonores tout en respectant les performances aérauliques.

Le conduit 10 a une hauteur 'H'. Les moyens d'obstruction 38 et 42 s'étendent sur une hauteur 'a'. Alternativement, les moyens d'obstruction 38 et 44 s'étendent sur des hauteurs différentes.

De façon préférentielle, les moyens d'obstruction 38 et 44 sont décalés d'une distance 'e' dans la direction d'écoulement du flux d'air F.

En considérant la première position 40 et la deuxième position 42 telles que définies en relation avec la figure 1, la première position 40 et la deuxième position 42 sont distantes l'une de l'autre d'une distance 'd'.

Selon la présente invention, en définissant comme origine la première position 40, selon la présente invention, le moyen d'obstruction 38 est donc disposé à une position 'p' telle que

$$0 < p < d.$$

De façon préférentielle, le moyen d'obstruction 38 est plus particulièrement disposé à une position 'p' telle que:

$$0 < p < d/2.$$

De même, le moyen d'obstruction 44 est donc disposé à une position 'p' telle que

$$0 < p < d.$$

et de façon préférentielle, le moyen d'obstruction 38 est plus particulièrement disposé à une position 'p' telle que:

$$0 < p < d/2.$$

Les figures 3 et 4 représentent le groupe moto-ventilateur 2 d'un appareil de chauffage, ventilation et/ou climatisation respectivement selon le premier mode de réalisation représenté en figure 1 et selon une variante de réalisation de la présente invention.

Le groupe moto-ventilateur 2 comporte deux roues ou turbines 7 mises en rotation par un moteur électrique maintenu à l'intérieur d'une enveloppe extérieure 9 du groupe moto-ventilateur 2.

L'enveloppe extérieure 9 comporte également deux volutes évolutives 3 entourant respectivement les deux roue 7 du groupe moto-ventilateur 2. Les deux volutes évolutives 3 débouchent dans des conduits 10 dédiés. Les conduits 10 s'étendent selon la hauteur 'H' et sur une largeur 'L'.

Selon la présente invention, les conduits 10 comprennent respectivement un moyen d'obstruction 38 ou 44 constitué par une cloison s'étendant sur la hauteur 'a' et sur une largeur 'b'.

Selon une variante de réalisation, les moyens d'obstruction 38 et 44 s'étendent sur des hauteurs différentes. De même, les moyens d'obstruction 38 et 44 s'étendent sur des largeurs différentes.

Le mode de réalisation de la figure 3 diffère de l'exemple de réalisation en figure 4 par la localisation des moyens d'obstruction.

Dans le mode de réalisation de la figure 3, les moyens d'obstruction 38 sont disposés sur la paroi du conduit 10 opposée au bec de volute 5 du groupe moto-ventilateur 2. Dans le mode de réalisation de la figure 4, les moyens d'obstruction 44 sont disposés sur la paroi du conduit 10 tangente au bec de volute 5 du groupe moto-ventilateur 2.

Selon la présente invention, les moyens d'obstruction 38 et 44 ont une épaisseur comprise entre 1 mm et 5 mm. La hauteur 'a' des moyens d'obstruction 38 et 44 est comprise entre 5% et 50% de la hauteur 'H' du conduit 10. Enfin, la largeur 'b' des moyens d'obstruction 38 et 44 est comprise entre 5% et 100% de la largeur 'L' du conduit 10.

Selon un exemple préféré de la présente invention, la hauteur 'a' des moyens d'obstruction 38 et 44 correspond à 15% de la hauteur 'H' du conduit 10, et la largeur 'b' des moyens d'obstruction 38 et 44 est égale à 30% de la largeur 'L' du conduit 10.

La présente invention trouve une application particulière dans les installations de chauffage, ventilation et/ou climatisation de véhicules automobiles telles que décrites précédemment.

Bien évidemment, l'invention n'est pas limitée aux modes de réalisation décrits précédemment et fournis uniquement à titre d'exemple. Elle englobe d'autres variantes de réalisation que pourra envisager l'homme du métier dans le cadre des revendications. Notamment, la présente invention couvre les dispositifs consistant en des combinaisons des différents modes de réalisation précédemment décrits pris dans leur ensemble ou uniquement en partie.

**Revendications**

1. Appareil de chauffage, ventilation et/ou climatisation, notamment pour un habitacle de véhicule automobile, comprenant un boîtier (1) logeant un groupe moto-ventilateur (2) et comportant au moins un conduit (10) ayant au moins une paroi (50) canalisant un flux d'air F depuis une sortie du groupe moto-ventilateur (2) dans le boîtier (1) selon une direction d'écoulement, le groupe moto-ventilateur (2) comportant une volute évolutive (3) comportant un bec de volute (5),

   **caractérisé en ce que** la paroi (50) du conduit (10) opposée au bec de volute (5) comporte au moins un moyen d'obstruction (38, 44) disposé selon un angle compris de 30° à 150° par rapport à la direction d'écoulement du flux d'air F.

**2.** Appareil de chauffage, ventilation et/ou climatisation selon la revendication 1, **caractérisé en ce que** le moyen d'obstruction (38, 44) est disposé sur la paroi (50) du conduit (10) tangente au bec de volute (5).

**3.** Appareil de chauffage, ventilation et/ou climatisation selon l'une des revendications précédentes, **caractérisé en ce que** l'appareil de chauffage, ventilation et/ou climatisation comporte un divergent (34) disposé en aval du conduit (10) et **en ce que** le moyen d'obstruction (38, 44) est disposé sur la paroi (50) entre le bec de volute et le divergent (34).

**4.** Appareil de chauffage, ventilation et/ou climatisation selon la revendication 3, **caractérisé en ce que**, la sortie du groupe moto-ventilateur (2) et le divergent (34) étant distants d'une longueur 'd', le moyen d'obstruction (38, 44) est agencé entre la sortie du groupe moto-ventilateur (2) et une position se trouvant à la moitié de la longueur 'd'.

**5.** Appareil de chauffage, ventilation et/ou climatisation selon l'une des revendications précédentes, **caractérisé en ce que** le moyen d'obstruction (38, 44) s'étend sur une hauteur 'a' comprise entre 5% et 50% d'une hauteur 'H' du conduit (10).

**6.** Appareil de chauffage, ventilation et/ou climatisation selon l'une des revendications précédentes, **caractérisé en ce que** le moyen d'obstruction (38, 44) s'étend sur une largeur 'b' comprise entre 5% et 100% d'une largeur 'L' du conduit (10).

**7.** Appareil de chauffage, ventilation et/ou climatisation selon l'une des revendications précédentes, **caractérisé en ce que** la paroi (50) comporte deux moyens d'obstruction (38, 44) disposés selon un angle compris de 30° à 150° par rapport à la direction d'écoulement du flux d'air F et **en ce que** les deux moyens d'obstruction (40, 42, 44) sont décalés d'une distance 'e' dans la dilection d'écoulement du flux d'air F.

**8.** Appareil de chauffage, ventilation et/ou climatisation selon la revendication 7, **caractérisé en ce que** les deux moyens d'obstruction (38, 44) s'étendent sur des hauteurs différentes.

**9.** Appareil de chauffage, ventilation et/ou climatisation selon la revendication 7 ou 8, **caractérisé en ce que** les deux moyens d'obstruction (38, 44) s'étendent sur des largeurs différentes.

**Claims**

**1.** Heating, ventilating and/or air conditioning device, notably for a passenger compartment of a motor vehicle, comprising a housing (1) accommodating an electric fan (2) and comprising at least one duct (10) having at least one wall (50) channelling an air stream F from an outlet of the electric fan (2) into the housing (1) in a direction of flow, the electric fan (2) comprising an open-ended volute (3) comprising a volute tongue (5),
**characterized in that** the wall (50) of the duct (10) opposite to the volute tongue (5) comprises at least one obstruction means (38, 44) placed at an angle of between 30° and 150° relative to the direction of flow of the air stream F.

**2.** Heating, ventilating and/or air conditioning device according to Claim 1, **characterized in that** the obstruction means (38, 44) is placed on the wall (50) of the duct (10) tangential to the volute tongue (5).

**3.** Heating, ventilating and/or air conditioning device according to one of the preceding claims, **characterized in that** the heating, ventilating and/or air conditioning device comprises a throat (34) placed downstream of the duct (10) and **in that** the obstruction means (38, 44) is placed on the wall (50) between the volute tongue and the throat (34).

**4.** Heating, ventilating and/or air conditioning device according to Claim 3, **characterized in that**, since the outlet of the electric fan (2) and the throat (34) are at a distance "d" from one another, the obstruction means (38, 44) is arranged between the outlet of the electric fan (2) and a position that is located at half the distance "d".

**5.** Heating, ventilating and/or air conditioning device according to one of the preceding claims, **characterized in that** the obstruction means (38, 44) extends over a height "a" of between 5% and 50% of a height "H" of the duct (10).

**6.** Heating, ventilating and/or air conditioning device according to one of the preceding claims, **characterized in that** the obstruction means (38, 44) extends over a width "b" of between 5% and 100% of a width "L" of the duct (10).

**7.** Heating, ventilating and/or air conditioning device according to one of the preceding claims, **characterized in that** the wall (50) comprises two obstruction means (38, 44) placed at an angle of between 30° and 150° relative to the direction of flow of the air stream F and **in that** the two obstruction means (40, 42, 44) are offset by a distance "e" in the direction of flow of the air stream F.

8. Heating, ventilating and/or air conditioning device according to Claim 7, **characterized in that** the two obstruction means (38, 44) extend over different heights.

9. Heating, ventilating and/or air conditioning device according to Claim 7 or 8, **characterized in that** the two obstruction means (38, 44) extend over different widths.


**Patentansprüche**

1. Heiz-, Belüftungs- und/oder Klimatisierungsvorrichtung, insbesondere für einen Fahrgastraum eines Kraftfahrzeugs, mit einem Gehäuse (1), in dem sich eine Elektrolüftergruppe (2) befindet und das wenigstens eine Leitung (10) enthält, die wenigstens eine Wand (50) besitzt, die einen Luftstrom F von einem Ausgang der Elektrolüftergruppe (2) in dem Gehäuse (1) in einer Strömungsrichtung kanalisiert, wobei die Elektrolüftergruppe (2) eine sich entwickelnde Spirale (3) enthält, die eine Spiralenmündung (5) aufweist,
**dadurch gekennzeichnet, dass** die Wand (50) der Leitung (10) gegenüber der Spiralenmündung (5) wenigstens ein Verschlussmittel (38, 44) aufweist, das unter einem Winkel im Bereich von 30° bis 150° in Bezug auf die Strömungsrichtung des Luftstroms F angeordnet ist.

2. Heiz-, Belüftungs- und/oder Klimatisierungsvorrichtung nach Anspruch 1, **dadurch gekennzeichnet, dass** das Verschlussmittel (38, 44) an der Wand (50) der Leitung (10) tangential zu der Spiralenmündung (5) angeordnet ist.

3. Heiz-, Belüftungs- und/oder Klimatisierungsvorrichtung nach einem der vorhergehenden Ansprüche, **dadurch gekennzeichnet, dass** die Heiz-, Belüftungs- und/oder Klimatisierungsvorrichtung ein Mischrohr (34) aufweist, das stromabseitig der Leitung (10) angeordnet ist, und dass das Verschlussmittel (38, 44) an der Wand (50) zwischen der Spiralenmündung und dem Mischrohr (34) angeordnet ist.

4. Heiz-, Belüftungs- und/oder Klimatisierungsvorrichtung nach Anspruch 3, **dadurch gekennzeichnet, dass**, wenn der Auslass der Elektrolüftergruppe (2) und das Mischrohr (34) um eine Länge "d" beabstandet sind, das Verschlussmittel (38, 44) zwischen dem Auslass der Elektrolüftergruppe (2) und einer Position, die sich in der Mitte der Länge "d" befindet, angeordnet ist.

5. Heiz-, Belüftungs- und/oder Klimatisierungsvorrichtung nach einem der vorhergehenden Ansprüche,
**dadurch gekennzeichnet, dass** sich das Verschlussmittel (38, 44) über eine Höhe "a" erstreckt, die im Bereich von 5 % bis 50 % einer Höhe "H" der Leitung (10) liegt.

6. Heiz-, Belüftungs- und/oder Klimatisierungsvorrichtung nach einem der vorhergehenden Ansprüche, **dadurch gekennzeichnet, dass** sich das Verschlussmittel (38, 44) über eine Breite "b" erstreckt, die im Bereich von 5 % bis 100 % einer Breite "L" der Leitung (10) liegt.

7. Heiz-, Belüftungs- und/oder Klimatisierungsvorrichtung nach einem der vorhergehenden Ansprüche, **dadurch gekennzeichnet, dass** die Wand (50) zwei Verschlussmittel (38, 44) umfasst, die unter einem Winkel im Bereich von 30° bis 150° in Bezug auf die Strömungsrichtung des Luftstroms F angeordnet sind, und dass die zwei Verschlussmittel (40, 42, 44) um eine Strecke "e" in Strömungsrichtung des Luftstroms F versetzt sind.

8. Heiz-, Belüftungs- und/oder Klimatisierungsvorrichtung nach Anspruch 7, **dadurch gekennzeichnet, dass** sich die zwei Verschlussmittel (38, 44) über unterschiedliche Höhen erstrecken.

9. Heiz-, Belüftungs- und/oder Klimatisierungsvorrichtung nach Anspruch 7 oder 8, **dadurch gekennzeichnet, dass** sich die zwei Verschlussmittel (38, 44) über unterschiedliche Breiten erstrecken.

**Fig. 1**

**Fig. 2**

**Fig. 3**

EP 2 154 013 B1

Fig. 4

**EP 2 154 013 B1**

**RÉFÉRENCES CITÉES DANS LA DESCRIPTION**

**Documents brevets cités dans la description**

- DE 3541263